(19) Europäisches Patentamt
European Patent Office
Office européen des brevets

(11) **EP 4 707 290 A1**

(12) **EUROPÄISCHE PATENTANMELDUNG**

(43) Veröffentlichungstag:
**11.03.2026 Patentblatt 2026/11**

(21) Anmeldenummer: **25200844.6**

(22) Anmeldetag: **08.09.2025**

(51) Internationale Patentklassifikation (IPC):
**C07K 1/14** (2006.01)  **A23J 1/12** (2006.01)
**A23J 3/14** (2006.01)  **A23J 1/00** (2006.01)
**A23L 33/185** (2016.01)

(52) Gemeinsame Patentklassifikation (CPC):
**A23J 1/005; A23J 1/007; A23J 1/125; A23J 3/14;**
**A23L 33/185**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **06.09.2024 EP 24199098**

(71) Anmelder: **Vitarbo AG**
**9320 Arbon (CH)**

(72) Erfinder:
• **ARCARI, Mario Christian**
**3008 Bern (CH)**

• **GUELPA, Raffaele**
**3012 Bern (CH)**
• **MÜLLER, Moritz**
**3011 Bern (CH)**
• **HEINE, Daniel**
**3005 Bern (CH)**
• **DENKEL, Christoph**
**8057 Zürich (CH)**

(74) Vertreter: **Pestalozzi, Deborah**
**Isler & Pedrazzini AG**
**Giesshübelstrasse 45**
**Postfach**
**8027 Zürich (CH)**

(54) **PROTEIN- UND FASERHALTIGES PRÄPARAT AUS GRÜNEM BLATTMATERIAL UND VERFAHREN ZU DESSEN HERSTELLUNG**

(57) Ein Proteinpräparat aus grünem Blattmaterial umfasst mindestens 55% Proteine in der Trockenmasse (w/w) und mindestens 25% Nahrungsfasern des grünen Blattmaterials in der Trockenmasse (w/w). Es kann nach Trocknung des grünen Blattmaterials, mechanischer Zerkleinerung (10) desselben zu einem Pulver (12), Durchführen mindestens einer Extraktion (20) mit mindestens einem Lösungsmittel oder einem Lösungsmittelgemisch zur Abtrennung oder teilweisen Abtrennung (202) von Zellmembranlipiden und weiteren im Lösungsmittel löslichen Stoffen zum Erhalt eines entfärbten Biomaterials, und Dispergierung (80) des Extraktionsrückstands in einer wässrigen Phase zu einer stabilen Dispersion hergestellt werden.

FIG. 1A

Processed by Luminess, 75001 PARIS (FR)

**Beschreibung**

TECHNISCHES GEBIET

Die vorliegende Erfindung betrifft ein Proteinpräparat aus grünem Blattmaterial. Die Erfindung betrifft weiterhin ein Verfahren, welches für die Gewinnung dieses Materials genutzt wird. Das Verfahren betrifft insbesondere ein Verfahren zur Gewinnung eines Protein-Faser-Komplexes aus grünem, getrocknetem Blattmaterial, insbesondere, aber nicht nur, aus Blättern der Pflanzengattung Moringa in einem industriellen Maßstab. Dabei werden Produkte aus grünem Blattmaterial gewonnen, die insbesondere mindestens einen funktionellen Nutzen aufweisen.

STAND DER TECHNIK

Aus dem Stand der Technik sind verschiedene Verfahren zum Erhalt einer protein- oder faserreichen Fraktion aus Pflanzenmaterial, beispielsweise aus Samen, bekannt:
WO 2010/097237 A1 offenbart ein Proteinpräparat und ein Verfahren zur Gewinnung dieser Proteinpräparate aus Lupinensamen, wobei die geschälten und zerkleinerten Samen mittels einem oder mehreren Extraktionsschritten Aromastoffe, Fette und Öle, sowie Komponenten, welche dem Proteinpräparat eine rötliche Farbe geben, zumindest teilweise abgetrennt werden, um ein entfettetes proteinhaltiges Mehl zu erhalten. Dabei können eines oder mehrere Lösungsmittel oder Gemische dieser eingesetzt werden, wobei deren Polarität zwischen Wasser und Hexan liegt. Dabei werden speziell alkoholische Lösungen und/oder scCO2 erwähnt.

Rodrigues, I. M., & Rocha, J. M. S haben in dem Artikel «Increasing the Protein Content of Rapeseed Meal by Enzymatic Hydrolysis of Carbohydrates» in BioResources, 9(2014), 2010-2025 ein Verfahren offenbart, bei welchem durch enzymatische Hydrolyse unlösliche Kohlenhydrate löslich gemacht werden, um durch Auswaschen der gelösten Kohlenhydrate den Proteingehalt im Rückstand zu erhöhen.

Aus dem Stand der Technik sind auch verschiedene Verfahren zur Extraktion von Pflanzenproteinen aus getrockneten Blättern bekannt.

Die EP 2 934 187 offenbart ein Verfahren zur Gewinnung eines Proteins aus einem Pflanzenmaterial, wobei das Verfahren die Schritte umfasst: i) mechanisches Aufschließen der Pflanzenzellen, um einen Pflanzensaft in Gegenwart eines Reduktionsmittels zu erhalten, ii) Behandeln des Pflanzensafts zur Aggregation von Chloroplastenmembranen, iii) Entfernung der aggregierten Chloroplastenmembranen durch Ausfällen und/oder Mikrofiltration, iv) Unterziehen des Pflanzensafts einer Ultrafiltration und v) Unterziehen des löslichen Pflanzenproteinkonzentrats einer hydrophoben Säulenadsorption, um unter anderem restliches Chlorophyll und phenolische Verbindungen in einer einzelnen Säulenpassage zu entfernen.

Die US 6,737,552 B1 beschreibt ein Verfahren zur Extraktion von Carotinoiden aus grünen Pflanzenmaterialien unter Verwendung einer überkritischen Flüssigkeitsextraktion. Eine erste und zweite überkritische Fluidextraktion wird an der Grünpflanzenzusammensetzung bei zwei unterschiedlichen Drücken durchgeführt, um zwei Extrakte zu erhalten. Der erste Extrakt enthält erhebliche Mengen an Beta-Carotin. Der zweite Extrakt ist im Wesentlichen frei von Beta-Carotin und enthält erhebliche Mengen an Lutein.

WO 2018/008030 A1 beschreibt die Produktion von wasserlöslichen Proteinen, welche aus entchlorophyllierter aquatischer Pflanzenbiomasse gewonnen wird. Dabei wird besagte Pflanzenbiomasse getrocknet, gemahlen, das Chlorophyll aus dem Material entfernt, um einen neutralen wässrigen Extrakt zu erhalten. Aus diesem Extrakt wird ein wasserlösliches Proteinkonzentrat gewonnen werden. Der faserreiche Rückstand wird getrocknet und vermahlen.

CN 117 481 284 A beschreibt eine komplexe Bindung einer Emulsion, bestehend aus einem speziellen Öl sowie Protein-Pektin-Komplexen (Protein aus alkoholischem Extrakt von Moringa) an einen Chitosanfilm.

CN 104 611 310 A beschreibt die Protein und Superoxiddismutasen-Gewinnung aus einem wässrigen Moringablatt-Extrakt.

CN 110 894 210 A beschreibt die sequentielle Gewinnung von hitzegefälltem Protein aus einem Moringablatt-Extrakt sowie nachfolgende Gewinnung von Flavonoiden aus dem Filtrat nach Proteinabtrennung, sowie nachfolgender Gewinnung von Superoxiddismutase.

CN 117 820 413 A beschreibt die Gewinnung von Proteinen aus einem Green Juice und die Differenzierung in Protein und Glycoprotein.

CN 110 786 438 A beschreibt die Gewinnung von Polypeptiden aus Cassava Blättern, wobei die Polypetide durch zweifache enzymatische Proteolyse erzeugt und anschliessend aufgereinigt werden.

CN 105 368 906 A beschreibt die Mikrowellen-assistierte Extraktion von Cassava-Blattproteinen durch mehrstufige enzymatische Hydrolyse, alkalische Vorbehandlung und mehrstufige Filtration inklusive einer Mikro- und Ultrafiltration.

CN 106 987 611 A beschreibt die Mikrowellen-unterstützte Extraktion von Blattprotein mithilfe von alkalischer Protease, Pektinase und mehrstufiger Membranfiltration mit einer keramischen und Polysulfon-Membran zur Herstellung von bioaktiven Polypeptiden.

US 4 233 210 A offenbart ein Verfahren zur Gewinnung von Protein aus grünem Material, basierend auf dem klassischen Ansatz der Extraktion eines grünen Saftes, der anschliessend aufbereitet wird.

US 2020/236 966 A1 offenbart ein Verfahren zur Abreicherung unerwünschter Komponenten bei gleichzeitig möglichst geringem Verlust an Protein.

US 2021/298 323 A1 offenbart ebenfalls ein Verfahren zur Abreicherung unerwünschter Komponenten aus Samen, Früchten und vergleichbarem Material durch konsekutive Extraktion mit verschiedenen Lösungsmitteln. Dabei wird insbesondere auf Raps abgestellt.

## DARSTELLUNG DER ERFINDUNG

Unter dem Begriff "Proteine" können ohne weitergehende Spezifizierung eine Vielzahl von stickstoffhaltigen Verbindungen subsummiert werden, beispielsweise wasserlösliche oder wasserunlösliche» Peptide, Polypeptide, wobei im üblichen Sprachgebrauch nicht zwischen Rohprotein, proteinogenen Stickstoffverbindungen und nicht-proteinogenen Stickstoffverbindungen unterschieden wird, da die Proteinquantifizierung oft alleine über den Stickstoffgehalt einer Probe erfolgt.

Unter «Rohprotein»/»Rohproteingehalt» wird verstanden das Ergebnis einer quantitativen Stickstoffbestimmung, typischerweise über die Kjeldahl- oder über eine im Ergebnis vergleichbare Verbrennungsmethode, wobei das Ergebnis der quantitativen Stickstoffbestimmung mit einem Konversionsfaktor von 6.25 multipliziert wird. Damit werden unter dem Begriff «Protein»/»Proteingehalt beispielsweise auch Stoffe subsummiert, die lediglich Stickstoff enthalten, wie beispielsweise Chlorophyll. Als Abkürzung kann im Folgenden «RP» verwendet werden

Unter «Nicht-proteinogenem Stickstoff» wird solcher Stickstoff verstanden, der üblicherweise quantitativ ermittelt wird aus dem elementaren Stickstoffgehalt im Überstand einer Probe nach deren Behandlung mittels Tanninsäure oder Trichloressigsäure im Wässrigen zur Ausfällung von proteinogenem Stickstoff, wobei der Stickstoffgehalt mit einem Konversionsfaktor von 6.25 multipliziert wird. Als Abkürzung wird im Folgenden «NPN» verwendet

Unter «proteinogenem Stickstoff» wird die Differenz aus RP minus NPN verstanden. Als Abkürzung wird im Folgenden «PN» verwendet.

Unter «nicht-proteinogenen Stoffen» werden alle Stoffe verstanden, die nicht unter die Definition von PN fallen.

Unter «wasserunlöslichem» Protein wird in der Anmeldung verstanden dasjenige PN, welches nach Suspendieren des Proteinpräparats in Wasser bei 40°C, nachfolgender Hydratisierungsphase von 60 min bei 40°C, dann Einstellung des pH-Werts auf 9, gefolgt von einer Hochdruckhomogenisator-Behandlung bei 10 MPa und einer anschliessenden Zentrifugation mit 10000 rcf für 15 min im Sediment vorliegt.

Unter «Nahrungsfaser» wird bezeichnet die Gesamtheit aller enthaltenen pflanzlichen Strukturen, die von körpereigenen Enzymen nicht abgebaut werden können. Dabei handelt es sich nach üblichem Verständnis um Cellulose, Hemizellulose, Pektine sowie um damit verwandte oder strukturelle ähnliche Stoffe sowie Verbindungen dieser Stoffe oder deren Verwandten untereinander sowie mit anderen Lebensmittelinhaltsstoffen.

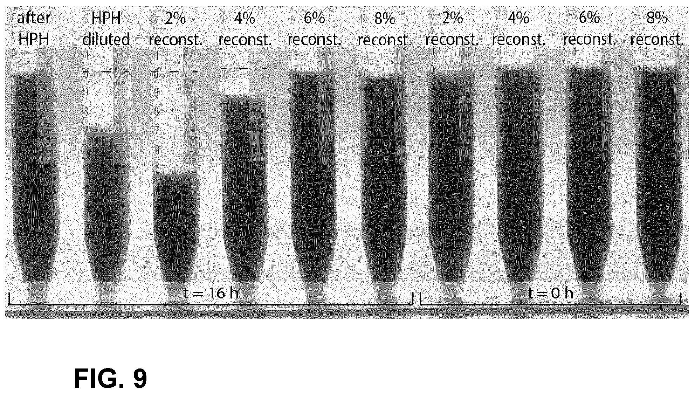

Unter «Dispersions- oder Dispergierstabilität» wird die Verhinderung der Aggregation von Partikeln oder Tröpfchen, der Koaleszenz und der Phaseninversion verstanden. Bei einer Dispersion des Proteinpräparats in wässrigem Medium handelt es sich hier um eine fest/flüssig Dispersion, also eine Suspension. Diese Dispersion/Suspension ist dann gegen Aggregation (Ausflockung und Koagulation, in Verbindung mit gleichzeitiger oder nachfolgender Sedimentation) stabilisiert. Als "dispersionsstabil"/"dispergierstabil" kann dabei eine Suspension angesehen werden, die bei einer bestimmten FeststoffKonzentration über 15 Minuten ohne Phasentrennung stabil ist. Es wird auch auf die Definition im Zusammenhang mit der Fig. 9 verwiesen.

Unter «Farbe» wird eine spezifische Kombination an Farbwerten gemäss des LAB-Farbraums (auch: L*a*b-Farbraum) verstanden. LAB-Werte (auch: L*a*b-Werte), beispielsweise des Produktpulvers werden gemäss ISO/CIE 11664-4 "Colorimetry - Part 4: CIE 1976 L*a*b* Colour space" angegeben. Dabei bedeuten:

$$L^* = \text{Helligkeit (0 schwarz, 100 weiss)}$$

$$a^* = \text{grün - rot } (-170 \rightarrow +100)$$

$$b^* = \text{gelb} - \text{blau } (-100 \rightarrow +150)$$

Unter «Mazeration» wird verstanden das Aussetzen eines Ausgangsmaterial gegenüber einem Lösungsmittel, um den Übergang der zu extrahierenden Substanzen vom Material in das Lösungsmittel zu ermöglichen.

Ausgehend vom Stand der Technik ist es eine Aufgabe der vorliegenden Erfindung, ein Produkt und das Verfahren zur Herstellung dieses Produkts anzugeben, welches einen grösseren Anteil des Proteins in grünem Blattmaterial nutzbar für die Lebensmittelindustrie macht.

Ausgehend vom genannten Stand der Technik wird die Aufgabe durch ein Proteinpräparat aus grünem Blattmaterial gelöst, das mindestens 30% wasserunlösliche Proteine in der Trockenmasse (w/w) und mindestens 30% Nahrungsfasern des grünen Blattmaterials in der Trockenmasse (w/w) enthält.

Beispiele für andere Pflanzengruppen als Basismaterial für das grüne Blattmaterial sind:

- Süssgräser (Poaceae): z.B. deutsches Weidelgras
- Hülsenfrüchtler (Fabaceae): z.B. Luzerne, Wiesenklee
- Bennussgewächse (Moringaceae): z.B. Moringa
- Brennnesselgewächse (Urticaceae): z.B. Brennnesseln

Weiteres grüne Blattmaterial kann beispielsweise, aber nicht nur, gewonnen werden aus:

- Salat,
- Mais,
- Raps,
- Zuckerrüben,
- Spinat.

Dabei können insbesondere Reste nach Verarbeitung der Früchte weiterverwendet werden.

Das Proteinpräparat ist ein entfärbter, weitgehend geruchsneutraler und/oder geschmacksneutraler, protein- und faserhaltiger Stoff aus grünem Blattmaterial welcher suspendiert in Wasser bei einer Konzentration von 1 bis 10 % (w/w), bevorzugter 2 bis 9 % (w/w), bevorzugter 3 bis 8 % (w/w), bevorzugter 4 bis 6 % (w/w), insbesondere 5 % (w/w) und einem Partikelgrössenmedian von zwischen 10 und 200 $\mu$m (Mikrometer), bevorzugt 20 und 150 $\mu$m, bevorzugt 30 und 120 $\mu$m, bevorzugter 50 und 100 $\mu$m insbesondere 60-80 $\mu$m, dispersionsstabil ist. Optisch ist es im getrockneten Zustand visuell frei von grünen Farbanteilen. Dispersionsstabilität ist wie oben beschrieben und nach Fig. 9 und der dazugehörigen Beschreibung definiert.

Dieses Produkt kann insbesondere mit einem Verfahren nach Anspruch 5 hergestellt werden. Das Verfahren ist zugleich ein Verfahren zum Gewinnen eines dispersionsstabilen Pflanzenproteinpräparat aus grünem Blattmaterial, insbesondere von Blättern der Pflanzengattung Moringa, in einem industriellen Maßstab.

Das beanspruchte Produkt zeichnet sich dadurch aus, dass es mindestens 70% (w/w), bevorzugt mindestens 75%, bevorzugter mindestens 80%, bevorzugter mindestens 85% der im grünen Blattmaterial verfügbaren RP genutzt werden, aber optisch unerwünschte Stoffe, insbesondere Chlorophylle und Carotinoide, und sensorisch störende Stoffe wie Glucosinolate und weitere Volatile quantitativ stark reduziert sind. Dabei stellen die abgetrennten Carotinoide eine Wertstofffraktion dar, ebenso die abgetrennten Membranlipide bzw. Phospholipide. Neben der optischen und sensorischen Verbesserung des Produktes gegenüber dem Ausgangsmaterial weist es zudem einen mindestens 30% höheren, bevorzugt mindestens 40% höheren, bevorzugter mindestens 50% höheren, bevorzugter mindestens 70% höheren, bevorzugter mindestens 90% höheren, am bevorzugtesten einen mehr als 120% höheren RP-Gehalt (jeweils w/w) gegenüber dem RP-Gehalt in dem Ausgangsmaterial, jeweils bezogen auf die Trockenmasse, auf. Das Produkt weist zudem einen mindestens 50% höheren, bevorzugt mindestens 70% höheren, bevorzugter mindestens 90% höheren, bevorzugter mindestens 120% höheren, am bevorzugtesten einen mehr als 150% höheren PN-Gehalt gegenüber dem PN-Gehalt in dem Ausgangsmaterial, jeweils bezogen auf die Trockenmasse auf. Ein solches Produkt nach Durchlaufen des kompletten Gewinnungsverfahrens weist dabei einen Gehalt an proteinogenem Stickstoff, hier bestimmt durch Stickstoffanalytik (z.B. CHN-Analyse, Stickstoffgehalt * 6.25) an wasserunlöslichen Proteinen von mehr als 30%, bevorzugt mehr als 35%, bevorzugter mehr als 40%, bevorzugter mehr als 45%, bevorzugter mehr als 50%, bevorzugter mehr als 55%, bevorzugter mehr als 60% am bevorzugtesten mehr als 65% (jeweils w/w) auf.

Das Produkt ist zudem im Vergleich zum Ausgangsmaterial auf der Zunge bei der Scherung zwischen Zunge und Gaumen sensorisch als nicht körnig, sondern als homogenes Material wahrnehmbar.

Die Farbe des Produkts unterscheidet sich deutlich von dem stark grünen Ausgangsmaterial, so dass das Pulver als Produkt nach der Verarbeitung eine ockerfarbene Erscheinung hat. In der Dispersion ist die Farbe bräunlich-grünlich.

Grüne pulverisierte Blätter können beispielsweise Werte von L* a* und b* haben zwischen

59.8, -1.5, 27.4 und
54.5, -6.5, 26.0

Die pulverisierten, entfärbten Blätter haben dann Werte von L* a* und b* zwischen:

66.2, 0.6, 28.4 und
64.1, -0.1, 27.4

Durch den in der vorliegenden Beschreibung erläuterten Prozess der Entfärbung können getrocknete und pulverisierte, grüne Blätter (gemessen im L*a*b*-Farbraum) verändert werden:

L* (Helligkeit): von zwischen +40 bis + 75, insbesondere von zwischen +50 und +60 auf höher als +65
a* (Grünstich): von zwischen - 10 und +10, insbesondere von zwischen -5 und -10 auf höher als 0
b* (Gelbstich): weitgehend ohne Veränderung, zwischen +20 und +35, insbesondere zwischen +25 und +30

Die L*a*b* Werte können dabei je nach Sorte, Ernte, Herkunft der Pflanzen variieren.

Das Produkt kann als dispergierte oder sprühgetrocknete Zutat zur Steigerung des Protein- und/oder Fasergehalts oder Lebensmittelzusatzstoff (Additiv) eingesetzt werden, beispielsweise zur Stabilisierung von Smoothies, Dressings und Saucen.

Geeignet ist das Produkt auch als Zusatz in Gebäcken, insbesondere Brot, zur Erhöhung des Protein- und Fasergehalts, wobei der Zusatz auch zu einer Erhöhung des Backvolumens führt (beispielsweise bei einem Zusatz von 5%). Die Erhöhung des Fasergehalts kann dazu genutzt werden, dass das Produkt als «Ballaststoffquelle» oder als «ballaststoffreich» ausgelobt werden kann, ohne dass das Produkt sensorisch negativ beeinflusst wird.

Das Verfahren zum Isolieren eines unlöslichen Pflanzenproteins aus grünem Blattmaterial in einem industriellen Maßstab hat in einer beispielhaften Ausführung die folgenden Schritte:

- mechanisches Mahlen von vorteilhafterweise getrockneten Blättern zu einem Pulver,
- Durchführen einer Extraktion, optional auch mehreren Extraktionen, beispielsweise mit einer überkritischen Extraktion des Pulvers mit Kohlendioxid, bevorzugt mit einem Anteil von Ethanol zwischen 5 und 10 Gewichts%, um einen Pflanzensaft zu entfernen, um ein entfärbtes Blattpulver zu erhalten,
- gefolgt von einem Nassvermahlen des entfärbten Blattpulvers in einem polaren, vorzugsweise einem wässrigen Fluid, um ein suspendiertes Blattmaterial zu erhalten,
- optional gefolgt von einer oder mehreren weiteren Extraktionen des suspendierten Blattmaterials mit einem polaren, vorzugsweise wässrigen, Fluid, insbesondere mit einer Einstellung des pH-Wertes auf Werte zwischen 7 und 8, insbesondere auf 7.5, und/oder optional gefolgt der Verwendung von Enzymen, insbesondere fibrolytischen Enzymen, um Polysaccharide löslich zu machen,
- gefolgt von einer Dispergierung, insbesondere durch eine Hochdruckhomogenisation vorzugsweise mit über 85 MPa, des suspendierten Blattmaterials, um eine dispersionsstabile protein- und faserreiche Suspension zu erhalten, welches eine Ausführung des Proteinpräparates darstellt.

Die dispersionsstabile protein- und faserreiche Suspension kann durch Sprühtrocknen zu einem protein- und faserreichen Pulver weiterverarbeitet werden.

Weitere Ausführungsformen sind in den abhängigen Ansprüchen angegeben.

KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. Die Zeichnungen in

Fig. 1A & 1B    zeigen zusammen ein Flussdiagramm der Verfahrensschritte eines Verfahrens nach einem Ausführungsbeispiel der Erfindung;

Fig. 2A    zeigt ein Flussdiagramm der Verfahrensschritte eines Verfahrens nach einem Ausführungsbeispiel der Erfindung;

Fig. 2B    zeigt ein Flussdiagramm mit weiteren vorteilhaften Verfahrensschritten eines Verfahrens nach einem Ausführungsbeispiel der Erfindung;

Fig. 3    zeigt weitere Verfahrensschritte einer Ausführungsform der Erfindung, bei denen zusätzliche die Ausbeute erhöhende Schritte in ein Verfahren nach Fig.

2A und 2B eingebaut werden;

Fig. 4    zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht;

Fig. 5    zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht;

Fig. 6    zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht;

Fig. 7    zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht;

Fig. 8    zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht; und

Fig. 9    zeigt eine Photographie einer Reihe von Proberöhrchen mit dem protein- und faserhaltigen Präparat.

BESCHREIBUNG BEVORZUGTER AUSFÜHRUNGSFORMEN

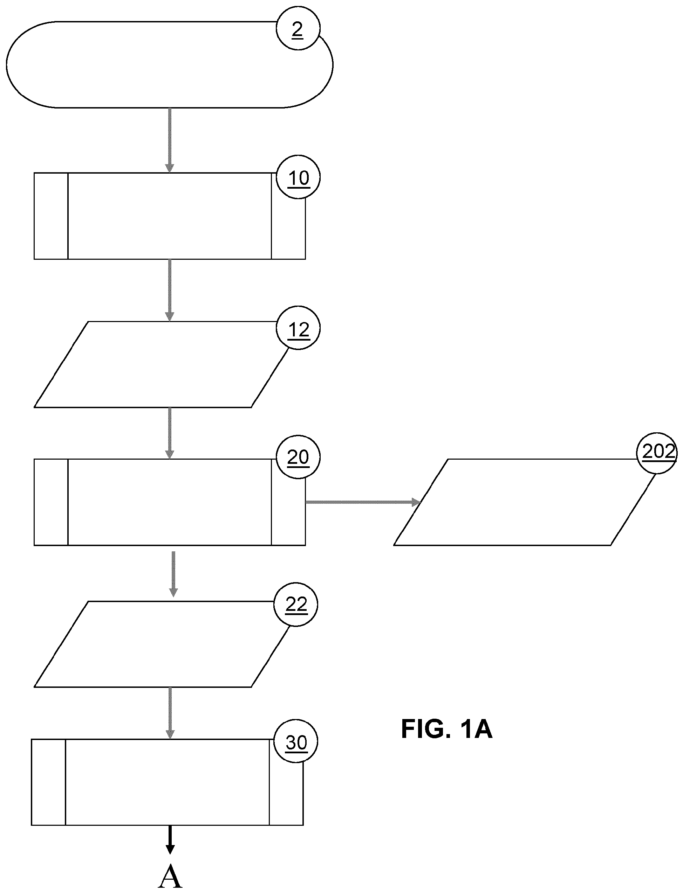

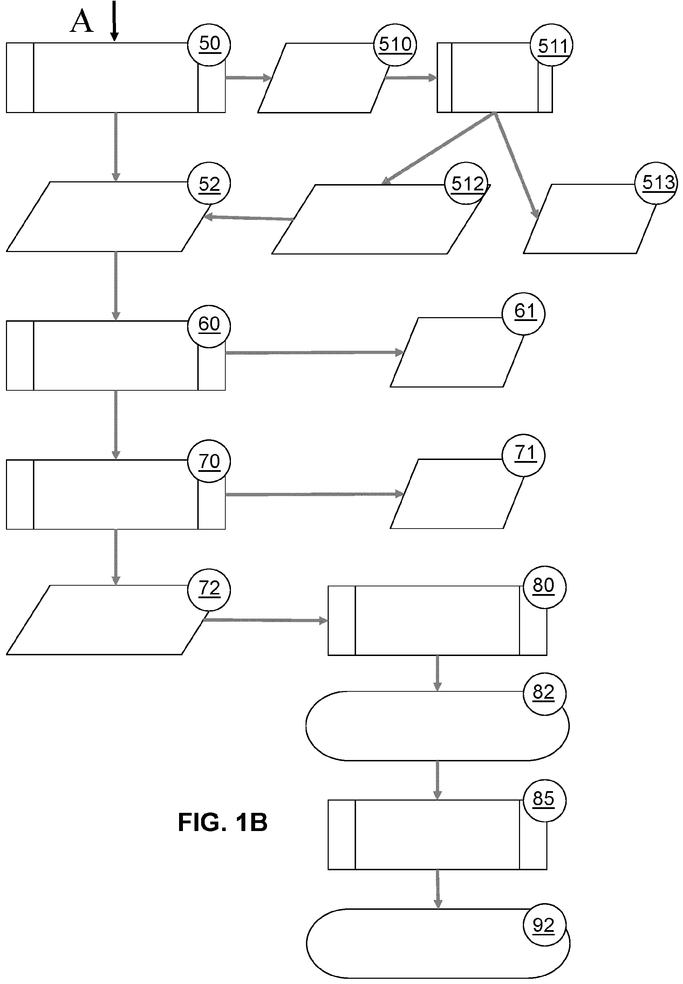

Die Fig. 1A und 1B zeigen zusammen ein Flussdiagramm der Verfahrensschritte eines Verfahrens zur Herstellung eines Proteinpräparats nach einem Ausführungsbeispiel der Erfindung. Beim Protein in genannten Proteinpräparat handelt es sich weit überwiegend um PN. Der RP-Gehalt in Blättern oft deutlich höher ist als der PN-Gehalt. Während des Extraktionsprozesses wird einerseits der RP-Gehalt durch Entzug von NPN reduziert und andererseits der PN-Gehalt durch das Entfernen nicht-stickstoffhaltiger Komponenten wie beispielsweise Polysacchariden, erhöht. Der Anteil von NPN am RP wird in der Literatur für Blätter zwischen 10 und 25% (w/w) angegeben. Eigene Quantifizierungen zeigen beispielsweise einen RP-Gehalt in Moringablättern von 27% (w/w) in der Trockenmasse, der nach dem Entfernen von NPN auf 22-23% (w/w) fällt. Nach Entfernen weiterer nicht-proteinogener Stoffe steigt der PN-Gehalt in einer Ausführungsform auf über 55% (w/w) in der Trockenmasse an.

Es werden dabei zwei Produktbeispiele gezeigt.

Da ein Grossteil der Proteine (PN) der grünen Blätter, vorzugsweise solcher aus Gräsern, Kräutern, Moringa oder Brennnesseln, unlöslich sind, erscheint die übliche Nassextraktion von PN wirtschaftlich nicht lohnend. Einen neuen Weg der Nutzbarmachung dieser unlöslichen Proteinfraktion stellt die Abreicherung von nicht-proteinhaltigen Stoffen aus grünen Blättern dar, um den Gehalt an wasserunlöslichem Protein in der Trockenmasse auf 30% (w/w), bevorzugter 40% (w/w), noch bevorzugter 45% (w/w), noch bevorzugter 50% (w/w), noch bevorzugter 55% (w/w), noch bevorzugter 65% (w/w), noch bevorzugter 70% (w/w), noch bevorzugter 75% (w/w) anzuheben.

Ein wesentliches, aber nicht das einzige, Ziel der Durchführung des Verfahrens ist es, möglichst alle nicht-proteinogenen Stoffe des Blattmaterials zu entziehen, indem verschiedene Extraktionsschritte nacheinander durchgeführt werden. Durch die schrittweise Extraktion können zum einen Wertstoffe wie Carotinoide, Luteine Phospholipide Zucker, wasserlösliche Stickstoffverbindungen und Glucosinolate gewonnen werden, zum anderen unerwünschte Komponenten wie NPN wie z.B. anorganischer Stickstoff gebunden in Salzen, aber auch Chlorophyll, welches ebenfalls stickstoffhaltig ist, entzogen werden. Durch geeignete Massnahmen kann ein Teil des faserreichen, unlöslichen Materials zudem löslich gemacht und durch Extraktion abgetrennt werden, so dass ein Proteinpräparat entstehen kann, dessen Gehalt an unlöslichen Proteinen höher ist als derjenige im grünen Blattmaterial, die im Prozess eingesetzt wurde. Zusätzlich werden durch genannte geeignete Massnahmen die im Produkt verbleibenden Fasern so verändert, dass sie verbesserte Funktionalitäten, beispielsweise eine erhöhte Wasser- und Fettbindefähigkeiten aufweisen.

In einer bevorzugten Ausführung der Erfindung werden getrocknete grüne Blätter 2 trockenvermahlen 10. Dies ergibt ein Pulver an grünem Biomaterial 12. Danach erfolgt der erste Schritt der Extraktion 20 mit apolaren Lösungsmitteln mit dem Ziel, die Zellen des Blattmaterials möglichst stark zu permeabilisieren, und insbesondere Lipide, Phospholipide und vergleichbares Material aus dem Zellverbund zu lösen. Als besonders geeignet haben sich Ethanol, Petrolether, Heptan, Hexan, Methanol erwiesen sowie weitere mehrwertige Alkohole, wobei geringe Mengen Wasser enthalten sein können. Die abgetrennten Lösungsmittel enthalten nach dem Extraktionsvorgang zusätzlich auch Carotinoide und Phospholipide, die als Wertstoff 202 vorteilhafterweise dem Produkt entzogen werden.

Vorzugsweise besteht eine Extraktion aus den folgenden Schritten: Das Suspendieren des Materials in einem Lösungsmittel (sowohl apolare wie auch polare), dem Mazerieren, gefolgt von einer Separation, wobei jeweils die flüssige Phase von der festen Phase getrennt werden.

Überraschenderweise hat sich herausgestellt, dass die Heissextraktion aus trockenen Blättern beispielsweise mit den genannten Lösungsmitteln zu einer Verbesserung der Ausbeute (PN im Proteinpräparat) im Gesamtprozess führen kann.

Ein alternatives Verfahren, welches aus einer zweifachen Extraktion mit Ethanol besteht, hat den Vorteil, dass keine potentiell gesundheitsgefährlichen Lösungsmittel eingesetzt und aus dem Extraktionsrückstand wieder entfernt werden müssen.

Ein alternatives Verfahren, welches aus einer ersten Extraktion 20 mit Ethanol besteht, gefolgt von einer Wiederholung der Extraktion 20 mit superkritischem CO2, hat den Vorteil, dass keine potenziell gesundheitsgefährdenden Lösungsmittel eingesetzt und aus dem Extraktionsrückstand wieder entfernt werden müssen.

Ein weiteres alternatives Verfahren, welches aus einer Extraktion mit superkritischem CO2 und 5-10% Ethanol als Co-Solvent besteht, hat den Vorteil, dass keine potenziell gesundheitsgefährdenden Lösungsmittel eingesetzt und aus dem Extraktionsrückstand wieder entfernt werden müssen.

Beispiel:

1 kg grüne Blätter von *Moringa oleifera* (entstielt) werden bei 40°C für 5 Stunden getrocknet, bis eine Feuchtegehalt von kleiner 8% erreicht ist. Das getrocknete Blattmaterial wird durch eine Schlagmühle pulverisiert, der mittlere Partikelgrössendurchmesser beträgt 158 $\mu$m (Mikrometer). Das Pulver wird anschliessend mit Heptan bei 140°C für 5 Stunden (5 h) extrahiert (Extraktion 20), Extraktionsrückstand und Lösungsmittelphase per Zentrifugation voneinander getrennt und der Extraktionsrückstand getrocknet. Es können zwei Extraktionen mit Ethanol bei 130°C, je 5 Minuten und 1.6 bar Druck durchgeführt werden.

Eine zweite Extraktion 50 erfolgt mit einem polaren Lösungsmittel, beispielsweise Wasser, mit dem Ziel polare Inhaltsstoffe wie NPN, niedermolekulare Zucker, Glucosinolate und weitere Pflanzeninhaltsstoffe herauszulösen und dadurch die Proteinkonzentration (PN) weiter zu erhöhen. Diese Extraktion kann im Falle von Wasser als Lösungsmittel durch Anpassung des pH-Wertes auf Werte zwischen pH 7.5 und 11 oder bevorzugter zwischen 9 und 10 verbessert werden. Hierfür wird das entfärbte Biomaterial 22 aus dem ersten Extraktionsschritt 20 einer Nassmahlung und einer Mazeration 30 unterzogen.

Die Effizienz einer dritten Extraktion 60 kann durch Anpassung des pH-Wertes auf Werte zwischen pH 7.5 und 11 oder bevorzugter zwischen 9 und 10 verbessert werden. Hierfür wird das entfärbte Biomaterial 22 aus dem ersten Extraktionsschritt 20 einer Nassmahlung und einer Mazeration 30 unterzogen.

In einer bevorzugten Ausführung der Erfindung erfolgt die zweite Extraktion 50 mit polaren Lösungsmitteln. Insbesondere hat sich Wasser als besonders geeignet erwiesen. Erstaunlicherweise hat sich Wasser ohne Anpassung des pH's als besonders geeignet gezeigt, wenn eine dritte Extraktion 60 mit der Zugabe von Enzymen durchgeführt wird, da eine Extraktion 50 mit Wasser zu einer Verbesserung oder gar dem Ermöglichen einer Enzymwirkung nach Enzymzusatz führt.

Die Effizienz einer dritten Extraktion 60 kann durch Zugabe von Enzymen, insbesondere fibrolytischer Enzyme verbessert werden. Nach Enzymzugabe wird das entfärbte Biomaterial 22 aus dem zweiten Extraktionsschritt 20 einem Nassmahlen und einer Mazeration 30 unterzogen. Als Enzym kann beispielsweise Viscozyme eingesetzt werden. Im Verfahren kann es beispielsweise für 4 h bei 50°C, gefolgt von einer anschliessenden Abtrennung der wässrigen Phase, eingesetzt werden. Alternativ können auch andere fibrolytische Enzyme wie Cellulase, Pektinase, Hemicellulase oder Xylanase eingesetzt werden, entweder einzeln oder in Kombination, um eine effiziente Zersetzung der Pflanzenzellwände zu gewährleisten und die Freisetzung sowie Konzentration der Proteine weiter zu optimieren.

Die Effizienz des Prozesses kann durch Wiederholungen der Extraktion mit einer weiteren Extraktion 70 mit polaren Lösungsmitteln gesteigert werden welcher zu einer Dialyse (Neutralisierung des pHs ohne Salzeintrag und verbessertes Auswaschen durch Verdünnung) führt.

Durch den enzymatischen Abbau nicht-proteinogener Bestandteile des Blattmaterials, gefolgt von anschliessendem Auswaschen der löslich gemachten Bestandteile der Blattmaterials wird der Anteil an Proteinen in der Trockenmasse des Rückstands nach Auswaschen um über 30%, bevorzugt über 40%, bevorzugter über 50%, bevorzugter über 60%, bevorzugter über 70%, bevorzugter über 80%, bevorzugter über 100%, bevorzugter über 150% (jeweils w/w) erhöht bezogen auf die Situation vor enzymatischer Behandlung. Überraschenderweise hat sich herausgestellt, dass die enzymatische Behandlung überhaupt erst ermöglicht wird, wenn das Substrat zuvor einer wässrigen Extraktion unterzogen wurde.

Die flüssige Phase 510 der Extraktion 50 wird geklärt 511, was zu einer Flüssigkeit reich an bioaktiven Substanzen 513 führt. Die aus der flüssigen Phase 510 gewonnenen Feststoffe 512 werden der Festphase 52 aus dem Extraktionsschritt 50 wieder zugeführt.

Danach wird dieser Extraktionsrückstand 72 beispielsweise durch eine Hochdruckhomogenisation dispergiert 80, wobei Drücke von über 50 MPa, bevorzugt über 60 MPa, bevorzugt über 75 MPa, bevorzugter über 85 MPa eingesetzt werden, bevorzugter über 100 MPa, bevorzugter über 120 MPa, um letztendlich einen entfärbten, geruchsneutralen, protein- und faserhaltigen Stoff 82 aus grünem Blattmaterial zu erhalten. Dieser kann in Wasser beispielsweise bei einer Konzentration von 5% (w/w) und einer Partikelgrössenmedian von 80 $\mu$m dispersionsstabil suspendiert werden. Eine Dispergierstabilität tritt überraschenderweise und insbesondere bei Hochdruckhomogenisationsdrücken von über 50 MPa auf. Bei einer Trockensubstanz (TS) von 6 % (w/w) konnte im gezeigten Beispiel in Fig. 9 eine Dispergierstabilität von mindestens 16 h erreicht werden.

Vorzugsweise ist bei der Dispergierung 80 vor der Hochdruckhomogenisation eine Nassvermahlung mittels Kolloid- und/oder Korrundmühle vorgeschaltet, die dazu geeignet ist, die Partikelgrössenverteilung so einzustellen, dass eine nachfolgende Hochdruckhomogenisation störungsfrei erfolgen kann.

In einem Schritt des Sprühtrocknens 85 des hochdruckhomogenisierten Mazerates 36 wird ein Pulver 92 des entfärbten, geruchsneutralen, protein- und faserhaltigen Stoffes erhalten.

Die Ausbeute an PN beträgt nach dem Verfahren bezogen auf den PN-Gehalt des grünen Blattmaterials über 85%, bevorzugt über 90%, bevorzugter über 95%, Angaben jeweils (w/w), bezogen auf den RP-Gehalt über 70%, bevorzugter über 75%, Angaben jeweils (w/w).

Beide Stoffe 82 und 92 stellen ein Proteinpräparat gemäss der Erfindung dar.

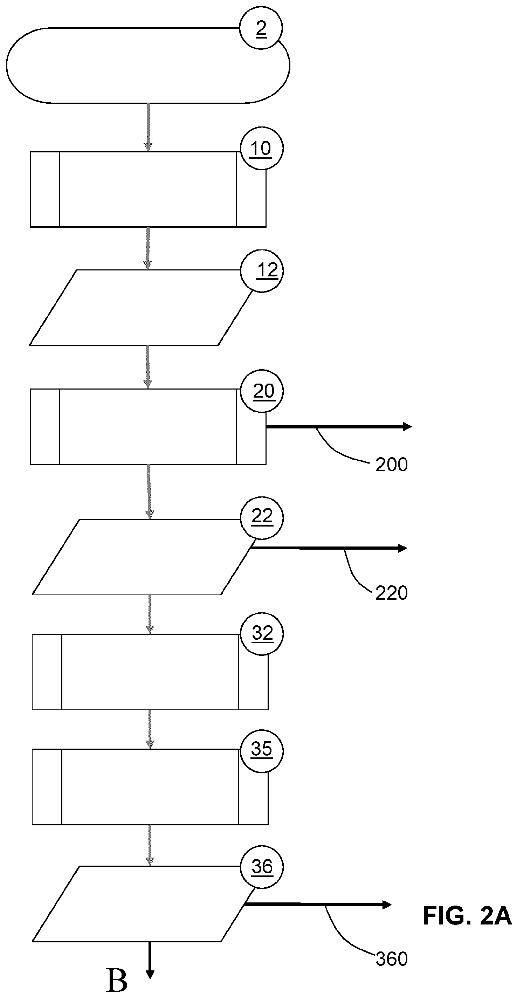

Die Fig. 2A zeigt ein Flussdiagramm der Verfahrensschritte eines Verfahrens nach einem weiteren Ausführungsbeispiel der Erfindung.

Das Verfahren isoliert insbesondere Anteil von unlöslichem Pflanzenprotein aus Blättern 2 der Pflanzengattung Moringa in einem industriellen Maßstab. Dabei umfasst das Verfahren die folgenden Schritte a) bis d).

a. optional: kontrollierte Trocknung des grünen Blattmaterials,
b. mechanische Zerkleinerung 10 des grünen Blattmaterials zu einem Pulver 12, insbesondere optional mit einer mittleren Partikelgrösse zwischen 50 $\mu$m und 250 $\mu$m, insbesondere zwischen 100 $\mu$m und 200 $\mu$m,
c. Durchführen mindestens einer Extraktion 20 mit mindestens einem Lösungsmittel oder einem Lösungsmittelgemisch zur Abtrennung oder teilweisen Abtrennung 202 von Zellmembranlipiden und weiteren im Lösungsmittel löslichen Stoffen zum Erhalt eines entfärbten Biomaterials, und
d. Dispergierung 35 des Extraktionsrückstands in einer wässrigen Phase zu einer stabilen Dispersion.

Neben Moringa-Blättern sind auch Proteinpräparate aus Gräsern, Kräutern oder Brennnesseln hergestellt worden. Solche Proteinpräparate können auch beispielsweise aus Salatresten etc., also einer Vielzahl von unterschiedlichsten Blattmaterialien hergestellt werden.

Das Verfahren beginnt mit dem Schritt b) des mechanischen Mahlens 10 von Moringa-Blättern 2 zu einem Pulver 12. Vorteilhafterweise sind diese Moringa-Blätter 2 getrocknete Moringa-Blätter 2. Wenn es sich um feuchte Blätter handelt, wird bevorzugt ein Trocknungsschritt vorgeschaltet.

Anschliessend wird im Extraktionsschritt c) eine Extraktion durchgeführt. Dazu kann, muss aber nicht, eine überkritische Extraktion 20 des Pulvers 12 mit Kohlendioxid zum Aufbrechen/Permeabilisieren der Pflanzenzellen des Blattmaterials durchgeführt. Dabei wird das Material auch mindestens teilweise entfärbt und/oder entfettet. Dabei wird ein Pflanzensaft erhalten, von dem anschliessend das Kohlendioxid entfernt wird, um ein entfärbtes Moringablätter-Pulver 22 zu erhalten. Vorteilhafterweise wird durch ein geeignetes Ethanol/CO2 Verhältnis eine maximale Entfärbung angestrebt. Andere Extraktionsverfahren sind nur auf Ethanolbasis oder mit den im Zusammenhang mit Fig. 1A und 1B genannten Extraktionsmitteln durchgeführt worden.

Dieses Moringablätter-Pulver 22 wird in einem ersten Resuspensionsschritt 32 mit einem ersten wässrigen Fluid wie Wasser und optional Bisulfid versetzt, insbesondere auch verbunden mit einer Einstellung des pH-Wertes auf einen Bereich zwischen 7 und 8, insbesondere um 7.5. Anschliessend wird dieses resuspendierte Moringablätter-Pulver in einer ersten Kolloidmühle behandelt.

Die nun vorliegenden gemahlenen suspendierten Moringablätter werden in einem Schritt d) einer Hochdruckhomogenisation 35 unterworfen, wobei diese insbesondere mit über 85 MPa durchgeführt werden kann. Damit wird ein erstes Mazerat 36 erhalten. Dieses Mazerat 36 kann, wie das Proteinprodukt 82 als Endprodukt verwendet werden.

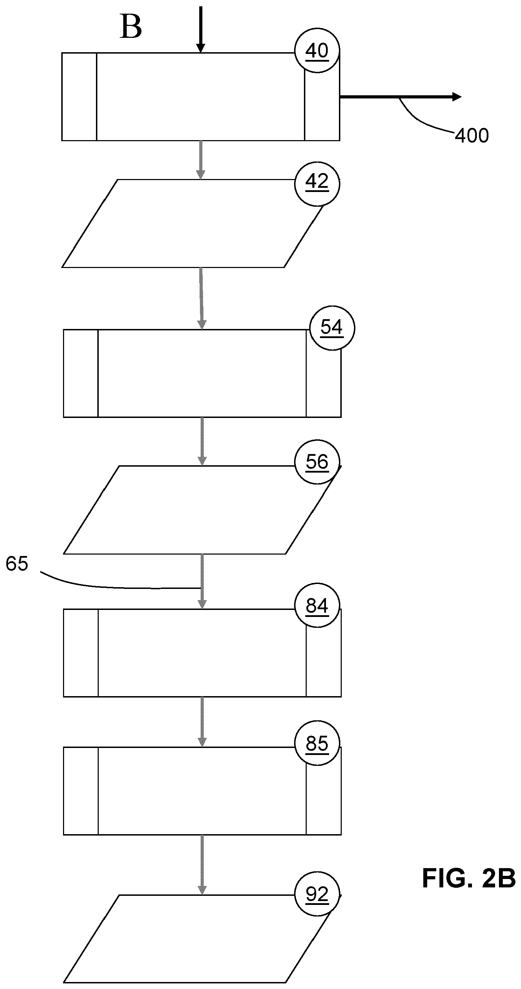

Die Fig. 2B zeigt - ausgehend von dem Produkt - ein Flussdiagramm der weiteren Verfahrensschritte eines Verfahrens nach einem Ausführungsbeispiel der Erfindung. Mit dem Pfeil markiert mit einem B wird das erste Mazerat 36 nun entsprechend weiterverarbeitet.

In einem ersten Dekantierschritt wird das erste Mazerat 36 im Dekanter dekantiert, um einen Dekanterkuchen/Rückstand 42 zu erhalten. Statt eines Dekanters können auch andere Operationen zur Trennung der Suspension durchgeführt werden, z.B. eine Zentrifugation oder auch eine grössenselektive Trennung in Form einer Filtration, beispielsweise Membranfiltration.

Anschliessend wird der Dekanterkuchen/Rückstand 42 einer Resuspension 54 unterzogen, wobei dieser zweite Resuspensionsschritt (nach dem ersten Resuspensionsschritt) mit einem zweiten wässrigen Fluid mit einer optionalen Einstellung des pH-Wertes insbesondere auf Werte zwischen 10 und 11 resuspendiert, um nach einem Einsatz einer zweiten Kolloidmühle ein zweites Mazerat 56 zu erhalten. Dieses Mazerat 56 kann, wie das Proteinprodukt 82 aus Fig. 1B als Endprodukt verwendet werden.

Danach kann dieses zweite Mazerat 56 einer weiteren Hochdruckhomogenisation 84 unterzogen werden, wobei auch hier ein Druck von über 50 MPa, bevorzugt über 60 MPa, bevorzugt über 75 MPa, bevorzugter über 85 MPa eingesetzt werden, bevorzugter über 100 MPa, bevorzugter über 120 MPa appliziert wird.

In einem Schritt des Sprühtrocknens 85 des hochdruckhomogenisierten zweiten Mazerates wird ein dispersionsstabiles protein- und faserreiches Pulver 92 erhalten.

Diese Schritte von Fig. 2B vervollständigen ein Flussdiagramm basierend auf den Verfahrensschritten, wie sie in Fig. 2A dargestellt sind.

Zusammengefasst beschreiben die Fig. 2A und 2B ein Verfahren, das mit einem mechanischen Mahlen von Moringa-Blättern zu einem Pulver beginnt und dem eine überkritischen Extraktion 20 des Pulvers mit Kohlendioxid zum Aufbrechen der Pflanzenzellen des Pflanzenmaterials nachgeschaltet wird, um einen Pflanzensaft zu erhalten, von dem das Kohlendioxid entfernt wird, um ein entfärbtes Moringablätter-Pulver zu erhalten, welches einer erste Resuspension 32 mit einem ersten wässrigen Fluid mit einer Einstellung des pH-Wertes zum Behandeln in einer ersten Kolloidmühle unterworfen wird, gefolgt von einer Hochdruckhomogenisation 35, insbesondere mit über 85 MPa, der gemahlenen suspendierten Moringablätter, um ein erstes Mazerat 36 als Proteinpräparat zu erhalten.

Dieses Mazerat ist eine Hauptfraktion zur Gewinnung von Proteinpräparaten aus getrockneten Moringa-Blättern. Dieses Verfahren kann auf mehreren Arten vorteilhaft erweitert werden. Nach Anspruch zwei wird das erste Mazerat 36 dekantiert, um einen Rückstand zu erhalten, welcher nach einer zweiten Resuspension 54 mit einem zweiten wässrigen Fluid mit einer optionalen Einstellung des pH-Wertes zum weiteren Behandeln in eine zweiten Kolloidmühle verbracht wird, um ein zweites Mazerat 56 zu erhalten, welches nach einer nachgeschalteten Hochdruckhomogenisation und einer Sprühtrocknung ein Protein- und Faserreiches Pulver bildet.

Dabei kann in diesem zweiten Verfahrensabschnitt nach dem zweiten Resuspendieren 54 ein Dekantieren des zweiten Mazerats 56 durchgeführt werden, um einen Dekantersaft 64 zu erhalten, der dann mit einem Tellerseparator 75 behandelt wird, um einen zweiten Dekanterkuchen/Rückstand 77 zu erhalten, der dann anstelle des zweiten Mazerates der Hochdruckhomogenisation 84 und Sprühtrocknung 85 zugeführt wird.

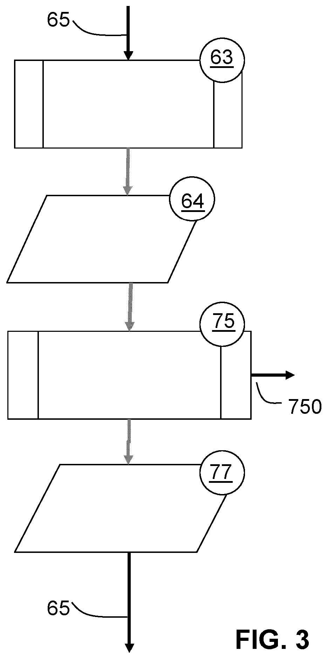

Fig. 3 zeigt nun weitere Verfahrensschritte einer Ausführungsform der Erfindung, bei denen zusätzliche die Ausbeute erhöhende Schritte in einem Verfahren nach Fig. 2A und 2B eingebaut werden. Mit anderen Worten, in einem Verfahren, in dem die Merkmale der Fig. 2A und 2B realisiert sind, werden nach dem Schritt 56 und vor dem Schritt 84 weitere Schritte eingeführt. Sie betreffen also den mit dem Bezugszeichen 65 versehenen Übergang nach dem Herstellen des zweiten Mazerates 56.

Der hier nun eingeführte Schritt umfasst das Dekantieren 63 des zweiten Mazerats 56, um einen Dekantersaft 64 zu erhalten. Dieser Dekantersaft wird in einem Schritt mit einem Tellerseparator 75 behandelt, um einen Rückstand des Tellerseparators 77 zu erhalten, der dann anstelle des zweiten Mazerates 56 zugeführt wird.

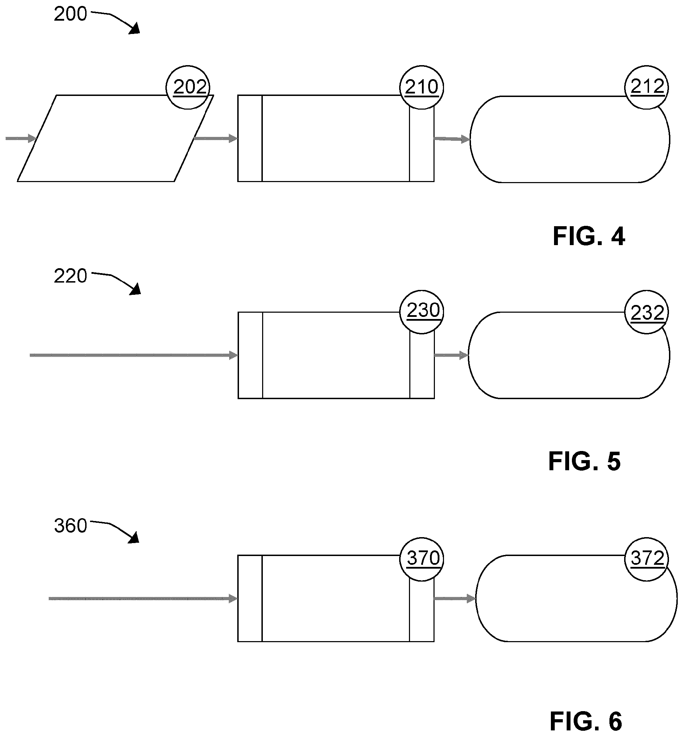

Fig. 4 zeigt dann weitere Verfahrensschritte von Ausführungsformen der Erfindung, bei denen zusätzliche die Ausbeute erhöhende Schritte in ein Verfahren nach Fig. 2A (ggf. und 2B) eingebaut werden, wobei die Erhöhung in einem aus diesem Verfahrensstrang gewonnenen Produkt besteht. Dafür wird im Schritt der überkritischen Extraktion 20 des Pulvers 12 mit Kohlendioxid zum Aufbrechen der Pflanzenzellen des Pflanzenmaterials, der verbleibende grüne Extrakt 202 durch Sedimentation in Wasser in einem Reinigungsschritt 210 zu einer eigenen Fraktion 212 verarbeitet. Dies ergibt eine zusätzliche, an bioaktiven Substanzen reiche Fraktion 212.

Fig. 5 zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht. Zur Erhöhung der Gesamtverfahrenseffizienz wird das nach der überkritischen Extraktion 20 erhaltene entfärbte Pulver 22 durch Trockenmahlen zu einem entfärbten Moringablätterpulver 232 verarbeitet, welches eine zusätzliche Fraktion darstellt.

Fig. 6 zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht. Das durch Hochdruckhomogenisation (HPH) behandelte erste Mazerat 36 wird in einem Schritt 360 in einer Sprühtrocknung 370 zu einem weiteren Protein- und Faserreichen dispergierbaren Pulver 372 umgewandelt.

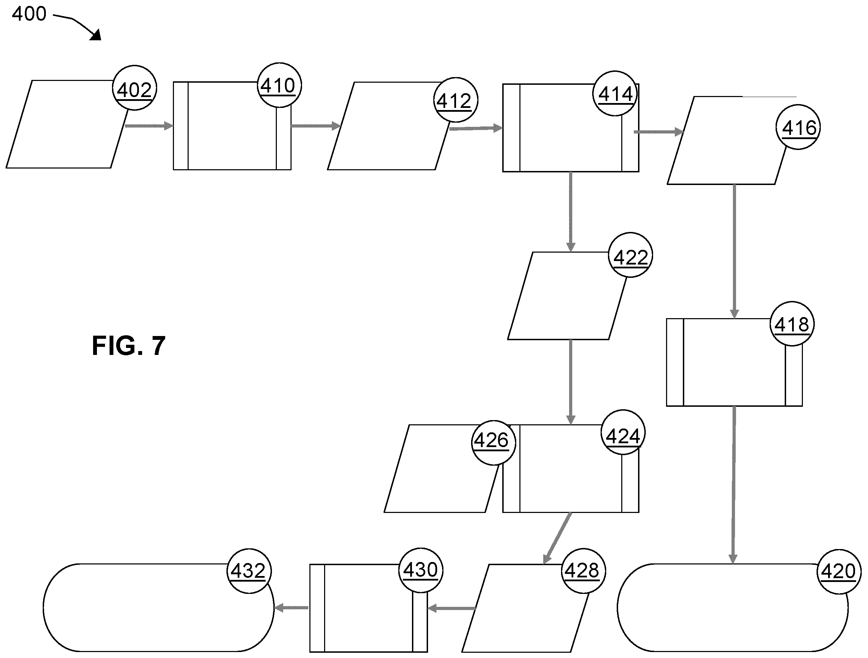

Fig. 7 zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht. Im Schritt des Dekantierens 40 kann der Dekantersaft 402 über einen Tellerseparator 410 geleitet werden. Nach dem Schritt des Dekantierens 40 wird der flüssige braune Saft 412 einer Mikrofiltration 414 unterzogen, wobei das sich ergebende Retentat 416 einer Sprühtrocknung 418 unterworfen wird, um ein proteinreiches Retentat 420 zu erhalten, während das sich ergebende Permeat 422 einer Ultrafiltration unterzogen wird, um dann das dortige Permeat 424 als ultrafiltriertes Permeat 426 zu erhalten und das Retentat 428 einer Sprühtrocknung 430 unterworfen wird, um ein Retentatpulver 432 zu erhalten.

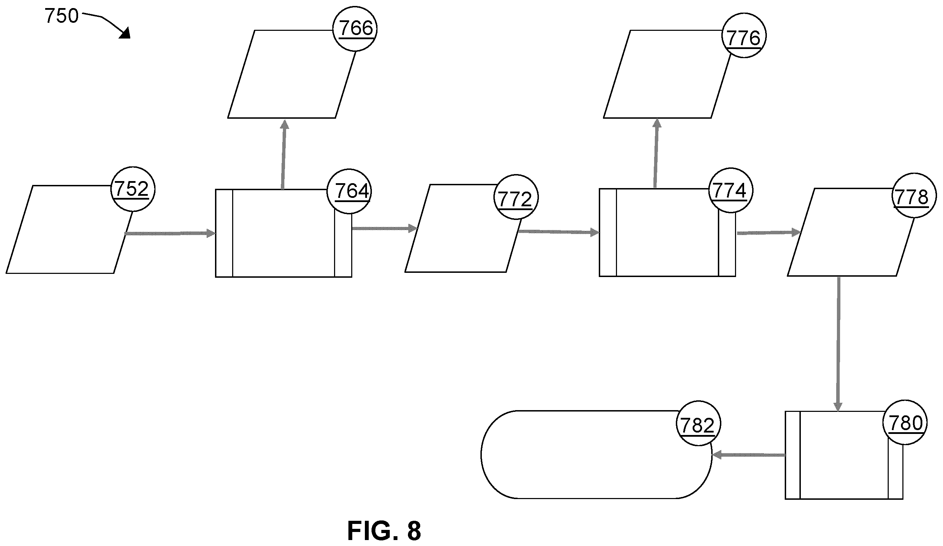

Fig. 8 zeigt weitere Verfahrensschritte von Ausführungsformen der Erfindung, bei denen zusätzliche die Ausbeute erhöhende Schritte in ein Verfahren nach Fig. 2A und 2B eingebaut werden, wobei die Erhöhung in einem aus diesem Verfahrensstrang gewonnenen Produkt besteht. Zur Erhöhung der Gesamtverfahrenseffizienz wird im Schritt der ersten Tellerseparation 75 der dabei entstehende geklärte braune Saft 752 einer Mikrofiltration 764 unterzogen, wobei das sich ergebende Retentat 766 wie das Retentat 466 einer Sprühtrocknung analog zu 418 unterworfen wird, um ein proteinreiches Retentat analog zu 420 zu erhalten, während das sich ergebende Permeat 772 einer Ultrafiltration unterzogen wird, um dann ein ultrafiltriertes Permeat 776 zu erhalten und das Retentat 778 einer Sprühtrocknung 780 unterworfen wird, um ein Retentatpulver 782 zu erhalten.

Fig. 9 zeigt eine Reihe von Proberöhrchen mit dem protein- und faserhaltigen Präparat aus grünem Blattmaterial nach 16 Stunden Standzeit bei Raumtemperatur, ausgehend von einer homogenen Verteilung des Materials direkt nach der Hochdruckhomogenisation (HPH). Von links nach rechts gesehen sind dargestellt:

- das Präparat nach der HPH mit 6% Trockensubstanz (after HPH);
- das Präparat nach der HPH 1:1 mit Wasser verdünnt (HPH diluted);
- rekonstituierte Präparate nach Sprühtrocknung mit 2, 4, 6 und 8 % Trockensubstanz dispergiert in Wasser (2% bis 8% reconst.);
- rekonstituierte Präparate nach Sprühtrocknung mit 2, 4, 6 und 8 % Trockensubstanz direkt nach dem Dispergieren in Wasser ohne stehen lassen.

Die gestrichelte Linie markiert die Füllmengen von 10 mL bei den Proberöhrchen mit Phasentrennung.

BEZUGSZEICHENLISTE

| | |
|---|---|
| 2 | getrocknete Moringa Blätter |
| 10 | mechanisches Mahlen |
| 12 | (trockenes) Pulver |
| 20 | erste Extraktion (mit apolaren Lösungsmitteln) |
| 22 | entfärbtes Moringablätter-Pulver |
| 30 | Nassmahlen und Mazeration |
| 32 | erste Resuspension |
| 35 | Hochdruckhomogenisation (HPH) |
| 36 | erstes Mazerat |
| 40 | Dekantieren |
| 42 | Dekanterkuchen/Rückstand |
| 50 | zweite Extraktion (mit polarem Lösungsmittel) |
| 52 | Rückstand dritte Extraktion |
| 54 | zweite Resuspension |
| 56 | zweites Mazerat |

| | |
|---|---|
| 60 | dritte Extraktion |
| 61 | Flüssige Phase der dritten Extraktion |
| 63 | Dekantieren |
| 64 | Dekantersaft |
| 65 | direkter Schritt |
| 70 | vierte Extraktion |
| 71 | Flüssige Phase der vierten Extraktion |
| 72 | aufgereinigter Extraktionsrückstand |
| 75 | erster Tellerseparator |
| 77 | /Rückstand des Tellerseparators |
| 80 | Dispergierung |
| 82 | Protein- und faserreiche Suspension |
| 84 | zweite Hochdruckhomogenisation |
| 85 | Sprühtrocknen |
| 92 | dispersionsstabiles protein- und faserreiches Pulver |
| 200 | Unterschritt zu Schritt 20 |
| 202 | grüner Extrakt |
| 210 | Reinigung |
| 212 | Fraktion reich an bioaktiver Substanz |
| 220 | Bearbeitung des Moringablätterpulvers |
| 230 | Trockenmahlen |
| 232 | entfärbtes Moringablätterpulver |
| 360 | weitere Behandlung des Mazerats |
| 370 | Sprühtrocknung |
| 372 | protein- und faserreiches Pulver (wie 92) |
| 400 | Verwendung des Dekantersafts |
| 402 | Dekantersaft |
| 410 | zweiter Tellerseparator |
| 412 | brauner Saft |
| 414 | Mikrofiltration |
| 416 | mikrofiltriertes Retentat |
| 418 | Sprühtrocknung |
| 420 | proteinreiches Retentatpulver |
| 422 | mikrofiltriertes Permeat |
| 424 | Ultrafiltration |
| 426 | ultrafiltriertes Permeat |
| 428 | ultrafiltriertes Retentat |
| 430 | Sprühtrocknung |
| 432 | Retentatpulver |
| 510 | Flüssige Phase der dritten Extraktion |
| 511 | Klärung der Flüssigkeit mit bioaktiven Substanzen |
| 512 | Ausgefällte Feststoff aus bioaktiver Phase |
| 513 | Flüssigkeit mit bioaktiven Substanzen (wie 212) |
| 750 | Trennung nach dem ersten Tellerseparator |
| 752 | geklärter brauner Saft |
| 764 | Mikrofitration |
| 766 | mikrofiltriertes Retentat |
| 772 | mikrofiltriertes Permeat |
| 774 | Ultrafiltration |
| 776 | ultrafiltriertes Permeat |
| 778 | ultrafiltriertes Retentat |
| 780 | Sprühtrocknung |
| 782 | Retentatpulver |

**Patentansprüche**

1. Proteinpräparat (36, 92), hergestellt aus grünem Blattmaterial, wobei das Proteinpräparat einen Proteingehalt (PN) von mindestens 55% in der Trockenmasse hat (w/w), wobei unter Proteingehalt (PN) diejenigen Proteine quantitativ subsummiert werden, die analytisch als «proteinogener Stickstoff» qualifiziert sind.

2. Proteinpräparat nach Anspruch 1, wobei das Proteinpräparat mindestens 25% Nahrungsfasern in der Trockenmasse (w/w) enthält.

3. Proteinpräparat nach Anspruch 1 oder 2, wobei das Proteinpräparat entfärbt ist und/oder das Proteinpräparat dispersionsstabil ist.

4. Proteinpräparat nach einem der Ansprüche 1 bis 3, wobei die Proteine wasserunlösliche Proteine sind.

5. Verfahren zur Herstellung eines Proteinpräparats aus grünem Blattmaterial (2) nach einem der Ansprüche 1 bis 4, **dadurch gekennzeichnet, dass** das Verfahren nachfolgende Schritte umfasst:

    mechanische Zerkleinerung (10) des grünen Blattmaterials zu einem Pulver (12), insbesondere optional mit einer mittleren Partikelgrösse zwischen 50 μm (Mikrometer) und 250 μm, insbesondere zwischen 100 μm und 200 μm, Durchführen mindestens einer Extraktion (20) mit mindestens einem Lösungsmittel oder einem Lösungsmittelgemisch zur Abtrennung oder teilweisen Abtrennung (202) von Zellmembranlipiden und weiteren im Lösungsmittel löslichen Stoffen zum Erhalt eines entfärbten Biomaterials als Extraktionsrückstand, und Dispergierung (35 und 82) des Extraktionsrückstands in einer wässrigen Phase zu einer stabilen Dispersion.

6. Verfahren nach Anspruch 5, wobei nach dem Extraktions-Schritt eine weitere Extraktion mit mindestens einem Lösungsmittel oder Lösungsmittelgemisch zur Abtrennung oder teilweisen Abtrennung polarer Stoffe durchgeführt wird.

7. Verfahren nach Anspruch 6, wobei auf die Extraktion in Anspruch 6 eine Extraktion mit mindestens einem wässrigen Lösungsmittel, zur Abtrennung oder teilweisen Abtrennung polarer und wasserlöslicher Stoffe folgt, nachdem zuvor eine enzymatische Behandlung durchgeführt wurde, wobei die Nahrungsfasern teilweise oder vollständig durch Enzyme abgebaut wurden, wobei der Proteingehalt (PN) des Extraktionsrückstands in der Trockenmasse nach einer nachfolgenden Abtrennung des Lösungsmittels erhöht wurde.

8. Verfahren nach irgendeinem der Ansprüche 5 bis 7, wobei vor dem Schritt des mechanischen Zerkleinerns des grünen Blattmaterials ein Schritt der Trocknung des grünen Blattmaterials durchgeführt wird.

9. Verfahren nach irgendeinem der Ansprüche 5 bis 8, wobei mindestens eine der Extraktionen, bevorzugt die erste, bei mindestens 95°C für mindestens 5 Minuten ausgeführt wird.

10. Verfahren nach irgendeinem der Ansprüche 5 bis 9, bei dem der wässrige Extrakt der weiteren Extraktion nach Anspruch 6, insbesondere als Flüssigkeit mit bioaktiven Substanzen, (513 zu 72) und/oder der Lösungsmittelextrakt von einer der Extraktionen desodoriert und entfärbt wieder zugesetzt (202 zu 72) sind.

11. Verfahren nach irgendeinem der Ansprüche 5 bis 10, wobei die Einstellung der Partikelgrössenverteilung in der Protein- und faserreiche Suspension (82) durch Hochdruckhomogenisation erfolgt, insbesondere mit mehr als 50 MPa, bevorzugter mehr als 85 MPa.

12. Verfahren nach irgendeinem der Ansprüche 5 bis 11, das gewährleistet, dass der Proteingehalt (PN) in der Trockenmasse des Endprodukts im Vergleich zum Proteingehalt (PN) in der Trockenmasse des Ausgangsprodukts um mindestens 80%, insbesondere um mindestens 100% erhöht wird.

13. Verfahren nach irgendeinem der Ansprüche 5 bis 12, **dadurch gekennzeichnet, dass** der pH-Wert der wässrigen Phase (bei 40, 50 oder 60) so eingestellt wird, dass nach einer nachfolgenden Abtrennung des Lösungsmittels der Proteingehalt des Extraktionsrückstands in der Trockenmasse erhöht ist, insbesondere um 10% und mehr erhöht ist, bezogen auf den Proteingehalt in der Trockenmasse vor Abtrennung des Lösungsmittels.

14. Verfahren nach irgendeinem der Ansprüche 5 bis 13, **dadurch gekennzeichnet, dass** durch das Verfahren mindestens 70% des Proteins (PN) aus dem Blattmaterial als Ausgangsmaterial in das Proteinpräparat übergeht.

15. Verwendung des Proteinpräparats nach einem der vorstehenden Ansprüche 1 bis 4 als Lebensmittelzutat.

**FIG. 1A**

FIG. 1B

**FIG. 2A**

FIG. 2B

65

63

64

75

750

77

65

FIG. 3

200

202

210

212

**FIG. 4**

220

230

232

**FIG. 5**

360

370

372

**FIG. 6**

FIG. 7

FIG. 8

FIG. 9

Europäisches Patentamt
European Patent Office
Office européen des brevets

**EUROPÄISCHER RECHERCHENBERICHT**

**Nummer der Anmeldung**

EP 25 20 0844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 117 481 284 A (UNIV HUNAN AGRICULTURAL) 2. Februar 2024 (2024-02-02) * Absätze [0056] - [0058]; Anspruch 1 * ----- | 1,3,4 | INV. C07K1/14 A23J1/12 A23J3/14 |
| X | CN 104 611 310 A (CHEN SHILIANG) 13. Mai 2015 (2015-05-13) | 1,3,4,15 | A23J1/00 A23L33/185 |
| Y | * Seite 4, Absatz 11 * * Seite 5, letzter Absatz * ----- | 2 | |
| X | CN 110 894 210 A (CHEN SHILIANG) 20. März 2020 (2020-03-20) | 1,3,4 | |
| Y | * Seite 4, Absatz 8 * ----- | 2 | |
| X | US 4 233 210 A (KOCH LEHEL) 11. November 1980 (1980-11-11) | 1,3,4 | |
| Y | * Beispiel 1 * ----- | 2 | |
| X | CN 117 820 413 A (UNIV JIANGNAN) 5. April 2024 (2024-04-05) * Beispiele 1-3; Tabelle 1 * ----- | 1,3,4 | |
| X | CN 105 368 906 A (NANNING ZHIBEN KANGYE BIOTECHNOLOGY CO LTD; LIANG MANSHUI) 2. März 2016 (2016-03-02) * Anspruch 1; Beispiele 1-3 * ----- | 5-14 | RECHERCHIERTE SACHGEBIETE (IPC) A23J A23L C07K |
| X | CN 106 987 611 A (GUANGXI TAIWANG BIOTECHNOLOGY CO LTD) 28. Juli 2017 (2017-07-28) * Ansprüche; Beispiele 1-3 * ----- | 5-14 | |
| X | CN 110 786 438 A (NANAN JUNCHENG AGRICULTURAL MACHINERY CO LTD) 14. Februar 2020 (2020-02-14) * Absatz [0076]; Ansprüche; Beispiele 1-3 * ----- -/-- | 5-14 | |

Der vorliegende Recherchenbericht wurde für alle Patentansprüche erstellt

| Recherchenort | Abschlußdatum der Recherche | Prüfer |
|---|---|---|
| München | 13. Januar 2026 | Muller, Isabelle |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

Europäisches Patentamt

European Patent Office

Office européen des brevets

**Nummer der Anmeldung**

**EP 25 20 0844**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/236966 A1 (RIIHINEN KAISU [FI] ET AL) 30. Juli 2020 (2020-07-30) <br> * Ansprüche 1,2,6,7 * <br> ----- | 5-14 | |
| Y | US 2021/298323 A1 (WNUKOWSKI PIOTR [NL] ET AL) 30. September 2021 (2021-09-30) <br> * Absätze [0052], [0072], [0085], [0086], [0089], [0090]; Ansprüche; Beispiele; Tabelle 6 * <br> ----- | 2 | |
| A | PÉREZ-VILA SARA ET AL: "Extraction of plant protein from green leaves: Biomass composition and processing considerations", <br> FOOD HYDROCOLLOIDS, ELSEVIER BV, NL, <br> Bd. 133, 30. Juni 2022 (2022-06-30), <br> Seiten 1-12, XP087149532, <br> ISSN: 0268-005X, DOI: <br> 10.1016/J.FOODHYD.2022.107902 <br> [gefunden am 2022-06-30] <br> * das ganze Dokument * <br> ----- | 1-15 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 13. Januar 2026 | Muller, Isabelle |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 20 0844

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2026

| Im Recherchenbericht angeführtes Patentdokument | Datum der Veröffentlichung | Mitglied(er) der Patentfamilie | | Datum der Veröffentlichung |
|---|---|---|---|---|
| CN 117481284 A | 02-02-2024 | KEINE | | |
| CN 104611310 A | 13-05-2015 | KEINE | | |
| CN 110894210 A | 20-03-2020 | KEINE | | |
| US 4233210 A | 11-11-1980 | AU | 511875 B2 | 11-09-1980 |
| | | GB | 1574946 A | 10-09-1980 |
| | | HK | 12981 A | 10-04-1981 |
| | | HU | 174943 B | 28-04-1980 |
| | | JP | S537482 A | 23-01-1978 |
| | | JP | S5761394 B2 | 24-12-1982 |
| | | MY | 8100305 A | 31-12-1981 |
| | | NL | 7707293 A | 03-01-1978 |
| | | NZ | 183833 A | 27-05-1980 |
| | | PH | 13641 A | 18-08-1980 |
| | | SU | 1087048 A3 | 15-04-1984 |
| | | US | 4233210 A | 11-11-1980 |
| CN 117820413 A | 05-04-2024 | KEINE | | |
| CN 105368906 A | 02-03-2016 | KEINE | | |
| CN 106987611 A | 28-07-2017 | KEINE | | |
| CN 110786438 A | 14-02-2020 | KEINE | | |
| US 2020236966 A1 | 30-07-2020 | AU | 2020318852 A1 | 17-03-2022 |
| | | CA | 3061254 A1 | 28-07-2020 |
| | | CN | 114449902 A | 06-05-2022 |
| | | EP | 4003046 A1 | 01-06-2022 |
| | | FI | 20195651 A1 | 31-12-2020 |
| | | US | 2020236966 A1 | 30-07-2020 |
| | | WO | 2021014053 A1 | 28-01-2021 |
| US 2021298323 A1 | 30-09-2021 | AU | 2019304484 A1 | 04-02-2021 |
| | | CA | 3104785 A1 | 23-01-2020 |
| | | CN | 112584706 A | 30-03-2021 |
| | | CN | 119949393 A | 09-05-2025 |
| | | EP | 3823460 A1 | 26-05-2021 |
| | | JP | 7464213 B2 | 09-04-2024 |
| | | JP | 2021529546 A | 04-11-2021 |
| | | UA | 130194 C2 | 17-12-2025 |
| | | US | 2021298323 A1 | 30-09-2021 |
| | | WO | 2020016222 A1 | 23-01-2020 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010097237 A1
- EP 2934187 A
- US 6737552 B1
- WO 2018008030 A1
- CN 117481284 A
- CN 104611310 A
- CN 110894210 A
- CN 117820413 A
- CN 110786438 A
- CN 105368906 A
- CN 106987611 A
- US 4233210 A
- US 2020236966 A1
- US 2021298323 A1

**In der Beschreibung aufgeführte Nicht-Patentliteratur**

- **RODRIGUES, I. M.** ; **ROCHA, J. M**. Increasing the Protein Content of Rapeseed Meal by Enzymatic Hydrolysis of Carbohydrates. *BioResources*, 2014, vol. 9, 2010-2025